# EUROPÄISCHE PATENTSCHRIFT

(11) **EP 1 398 841 B1**
(45) Veröffentlichungstag und Bekanntmachung des Hinweises auf die Patenterteilung: **18.11.2009**
(21) Anmeldenummer: 02405804.2
(22) Anmeldetag: 16.09.2002
(51) Int. Cl.: H01M 2/30, H01M 2/06

(54) **Batterie mit einer mechanisch spannbaren Verbindung**
Battery with a mecanical tensible connection
Batterie comprenant une connexion mécaniquement extensible

(43) Veröffentlichungstag der Anmeldung: 17.03.2004
(73) Patentinhaber: Wyon AG, 9050 Appenzell (CH)
(72) Erfinder: Wyser, Paul I., 9050 Appenzell (CH)
(74) Vertreter: Roshardt, Werner Alfred

(56) Entgegenhaltungen:
- EP-A- 0 822 605
- EP-A- 1 067 610
- US-A- 3 384 857
- US-A- 5 707 758

## Beschreibung

### Technisches Gebiet

Die Erfindung betrifft eine Batterie mit mindestens einem gewickelten Elektrodenelement und mindestens einem Stift zur Kontaktierung des Elektrodenelements in einem Gehäuse und mit mindestens einem an einer Aussenseite des Gehäuses angebrachten Kontaktanschluss, welcher mit dem im Gehäuse angeordneten Stift elektrisch verbunden ist.

### Stand der Technik

Die Verbreitung elektronischer Geräte nimmt ständig zu. Gleichzeitig können diese in immer kompakterer Form hergestellt werden. Bei solchen miniaturisierten Geräten, z. B. bei jenen, die vom Benutzer während längerer Zeit oder dauerhaft mitgetragen werden (wie Hörgeräte, Insulinpumpen oder andere Medikamentenspender usw.) ist wichtig, dass die Batterie zur Stromversorgung ebenfalls möglichst kompakt, gleichzeitig aber auch leistungsfähig ist, d. h. ein möglichst grosses Verhältnis zwischen Kapazität und Volumen aufweist. Aufgrund des Dauerbetriebs solcher Geräte, deren Miniaturisierung (und damit der einsetzbaren Batterien) sowie deren zum Teil trotzdem hohen Energiebedarf ist es nötig, die Batterien regelmässig (oft täglich) auszubauen und aufzuladen.

Aus der EP 1 100 138 ist eine gewickelte Batterie bekannt, welche einen raumsparenden Aufbau aufweist und damit eine grosse Kapazität mit geringem Raumbedarf ermöglicht. Der Stromanschluss ist dabei durch in das Gehäuse hinein ragende Röhrchen gebildet, welche gleichzeitig als Träger für den mit Elektrolyt getränkten Elektrodenwickel dienen.

Die dabei aus mechanischen Gründen nötige Abstützung der Röhrchen am Batterieboden führt allerdings noch immer zu einem Raumverlust. Ausserdem eignet sich die elektrische Kontaktierung mittels ins Gehäuse hinein ragender Stifte nicht für Geräte, deren Batterien häufig ausgewechselt werden müssen, denn der Aus- und Wiedereinbau ist umständlich und die mechanische Beanspruchung der Batterie kann nach einer gewissen Zeit zu Abnützungen führen, welche die Batterie unbrauchbar machen oder die Betriebssicherheit gefährden.

Die US 5,707,758 (Nissan) zeigt eine Batterie, welche ein gewickeltes Elektrodenelement aufweist, das in einem zylindrischen Stahlgehäuse untergebracht ist. Im Zentrum der Wicklung ist ein Stift angeordnet, welcher ein Innengewinde aufweist, das mit einer Schraube aus rostfreiem Stahl zusammenwirkt. Zur Abstützung weist der Stift einen scheibenförmigen Abschnitt auf, welcher mit der Innenseite des Gehäuses zusammenwirkt. Der Kopf der Schraube ist ausserhalb des Gehäuses angeordnet und bildet einen Kontaktanschluss. Der Stift erstreckt sich bis auf die Aussenseite des Gehäuses und weist dort ein Aussengewinde auf, so dass er mittels einer Mutter fest am Gehäuse gehalten werden kann.

Die entsprechende Konstruktion ist kompliziert und weist einen hohen Raumbedarf im Innern der Batterie auf.

### Darstellung der Erfindung

Aufgabe der Erfindung ist es, eine dem eingangs genannten technischen Gebiet zuzuordnende Batterie anzugeben, welche raumsparend aufgebaut ist und Kontaktflächen aufweist, welche einen häufigen Aus- und Wiedereinbau der Batterie in ein Gerät erleichtern.

Die Lösung der Aufgabe ist durch die Merkmale des Anspruchs 1 definiert. Gemäss der Erfindung ist zwischen dem Kontaktanschluss an der Aussenseite des Gehäuses und dem Stift zur Kontaktierung des Elektrodenelements im Innern des Gehäuses eine mechanisch spannbare Verbindung ausgebildet, welche derart angeordnet ist, dass der Stift im Innern des Gehäuses stabil an der Gehäusewand gehalten ist.

Eine solche Verbindung schafft einerseits zwischen dem Verbindungselement und dem Kontaktanschluss einen Kontaktdruck, welcher dazu führt, dass die elektrische Energie ohne nennenswerten Verlust und ohne Auftreten von Korrosion vom Verbindungselement zum Kontaktanschluss übertragen wird. Andererseits wird durch eine solche Verbindung der Stift zur Kontaktierung des Elektrodenelements im Innern des Gehäuses stabil an der Gehäusewand gehalten. Ist das Elektrodenelement um den Stift gewickelt, wird dadurch auch dieses an der Gehäusewand fixiert. Zusätzliche Halterungen an der gegenüberliegenden Gehäusewand werden also nicht benötigt, wodurch das aktive Volumen, welches z: B. elektrochemisch aktiven Komponenten zur Verfügung steht, vergrössert werden kann. Die spannbare Verbindung bewirkt zudem, das der Batterie-Innenraum gegen aussen gasdicht abgeschlossen ist. Der Kontaktanschluss an der Aussenseite des Gehäuses erlaubt eine einfache Kontaktierung durch das Gerät, welches mit Strom versorgt werden soll, und durch ein Ladegerät zum Aufladen der Batterie. Der Kontaktanschluss kann den Erfordernissen dieses Geräts bezüglich Form, Grösse, Material und Anordnung der Kontaktflächen weitgehend angepasst werden.

Vorzugsweise ist die spannbare Verbindung durch eine Schraubverbindung gebildet. Eine verschraubte Durchführung erlaubt einen grossen Anpressdruck zum Kontaktanschluss auf der Aussenseite und bietet gleichzeitig durch die grosse Oberfläche von Gewinde und Schraube einen guten Kontakt zum Stift zur Kontaktierung des Elektrodenelements im Innern des Gehäuses. Schliesslich wird auch die Herstellung und die Wiederverwertung der erfindungsgemässen Batterie durch eine Schraubverbindung vereinfacht, indem eine solche auf einfache Art und Weise gespannt und gegebenenfalls wieder gelöst werden kann.

Alternativ zur Schraubverbindung könnte beispielsweise auch ein Federmechanismus vorgesehen sein, welcher den Stift in eine ins Gehäuse hinein ragende Aufnahme des Kontaktanschlusses drückt und ihn damit fixiert. Dazu könnte der Stift zur Kontaktierung des Elektrodenelements mit einem Verbindungselement in der Art eines Bajonett-Verschlusses versehen sein, das mit einem entsprechenden Gegenstück, welches den Kontaktanschluss bildet oder mit ihm verbunden ist, zusammenwirkt. Wahlweise kann der Stift zur Kontaktierung des Elektrodenelements mit einem Kopf versehen sein, welcher auf der Aussenseite des Gehäuses liegt, sowie mit einer Ausnehmung, in welche auf der Innenseite des Gehäuses ein Klemmkeil eingetrieben wird, bis der Anpressdruck zwischen Kopf und Gehäuse den gewünschten Wert erreicht.

In bestimmten Anwendungen kann es zweckmässig sein, dass der Kontaktanschluss, also die Fläche, welche durch ein externes Element zur elektrischen Kontaktierung berührt wird, durch den Kopf der Schraube gebildet wird. Dies reduziert einerseits die Anzahl der Bauteile, andererseits entfällt eine elektrische Verbindung zwischen der Schraube und einem zusätzlichen Kontaktelement, wodurch Energieverluste verhindert und die Korrosionsgefahr verkleinert werden. Dient der Schraubenkopf gleichzeitig zur Kontaktierung zwischen Gerät und Batterie, kann es zweckmässig sein, seinen Durchmesser grösser zu wählen als dies aus mechanischen Gründen nötig wäre, so dass sich die Kontaktfläche, welche durch die Stirnfläche und den Mantel des Schraubenkopfs gebildet wird, vergrössert.

Mit Vorteil besteht der Kontaktanschluss im Wesentlichen aus Gold oder Nickel oder er ist vergoldet oder vernickelt. Dies verbessert den elektrischen Kontakt zum Gerät und vermindert die Korrosion, was die Lebensdauer der Batterie verlängert. Bildet der Schraubenkopf den Kontaktanschluss kann dieser ganz oder teilweise mit einer Gold- oder Nickelschicht überzogen sein. Wahlweise kann die Schraube massiv aus Nickel aufgebaut sein.

Vorzugsweise ist die Batterie so ausgebildet, dass zwei Stifte im Gehäuse untergebracht sind und dass an der Aussenseite des Gehäuses zwei Kontaktanschlüsse vorgesehen sind, welche gegenüber dem Gehäuse isoliert sind. Das Gehäuse ist somit potenzialfrei und kann insbesondere aus gasdichtem Kunststoff hergestellt werden. Dies erlaubt eine einfachere und günstigere Herstellung, schliesst eine Korrosion des Gehäuses aus und vermindert das Gewicht der Batterie. Der grösste Vorteil dieser Lösung liegt aber darin, dass keine aufwendigen Isolationen auf der Innenseite des Gehäuses (gegenüber der Anode oder z. B. Dichtungshülsen zur Kontaktdurchführung des Minuspols) notwendig sind und damit der Abstand zwischen der äusseren Kontaktfläche zum nutzbaren Innenraum verkleinert werden kann, was eine grosse Platzersparnis bedeutet.

Der Stift kann, zumindest teilweise, als Röhrchen ausgebildet sein, welches an einem Ende eine Verbreiterung aufweist, die zur Abstützung an einer Innenwand des Gehäuses dient. Auch bei Stiften mit einem kleinen Durchmesser und damit kleinem Platzbedarf ist dank der Verbreiterung die Anpressoberfläche zwischen Stift und Gehäuse so gross, dass der Anpressdruck derartig gewählt werden kann, dass die Kontaktdurchführung gasdicht ist. In das Innere der röhrchenförmigen Stifte kann z. B. eine Schraube für die Schraubverbindung eingedreht werden.

Vorzugsweise ist der Stift nur einseitig, d.h. nur an einem seiner Enden, gehalten. Durch die Ersparnis einer zweiten Halterung an seinem anderen Ende wird wertvoller Raum innerhalb des Batteriegehäuses gespart. Aufgrund der mechanisch spannbaren Verbindung zwischen dem Stift und dem Kontaktanschluss kann der Stift auch einseitig stabil gehalten werden.

Im Bereich des Kontaktanschlusses kann eine Kontaktplatte vorgesehen sein. Diese vergrössert die Fläche des Kontaktanschlusses und erlaubt damit eine bessere elektrische Verbindung zum Gerät. Die Kontaktplatte kann insbesondere als Printplatte aufgebaut sein, welche ganz oder teilweise mit einer leitfähigen Schicht versehen ist. Der Kontaktanschluss wird für geringere Korrosionsanfälligkeit und bessere Leitfähigkeit mit Vorteil vergoldet oder vernickelt.

Wenn die Kontaktplatte in einer Vertiefung des Gehäuses angeordnet ist, wird das Aussenvolumen der Batterie verringert. Trotzdem kann durch eine mechanisch stabile Verbindung, insbesondere eine Klebung, zwischen Kontaktplatte und darunterliegendem Gehäuse die mechanische Stabilität gewährleistet werden, indem die Kontaktplatte ein tragendes Element des Batteriegehäuses darstellt. Die Anordnung der Kontaktplatte in einer Vertiefung vermeidet zudem vorstehende Teile, welche z. B. beim Einsetzen der Batterie zu mechanischen Problemen führen und die Handhabung der Batterie stören können.

Die Kontaktplatte kann zwei gegeneinander isolierte Kontaktanschlüsse aufweisen. Diese Lösung wird insbesondere dann gewählt, wenn das Gehäuse z. B. ein Kunststoffgehäuse und damit potenzialfrei ist, so dass sowohl ein Plus- als auch ein Minuspol nach aussen zu je einem Kontaktanschluss geführt werden müssen. Die Kontaktanschlüsse können z. B. als vergoldete oder vernickelte, auf eine Printplatte aufgebrachte Kontaktpartien realisiert werden, welche miteinander nicht leitend verbunden sind. Diese durch die beschichtete Printplatte gebildeten Kontaktpartien werden dann von je einem Stift via die jeweilige mechanisch spannbare Verbindung gespiesen.

In bestimmten Anwendungen ist es nützlich, wenn auf der Kontaktplatte elektronische Bauteile aufgebaut werden. Diese können integrierte Schaltkreise, Kondensatoren, Widerstände, Spulen, Sicherungen oder andere Komponenten umfassen und z. B. zur Anpassung an das Gerät oder zur Steuerung der Batterieladung und -entladung dienen. Besonders einfach lässt sich ein solcher Aufbau realisieren, wenn die Kontaktplatte als Printplatte realisiert ist, so dass die Bauteile wie in der Elektronik üblich aufgebracht, insbesondere aufgelötet werden können.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a: eine schematische Darstellung eines herkömmlichen Anodenableiters mit einer Kontaktdurchführung mittels Metallniete;
- Fig. 1b: eine schematische Darstellung einer herkömmlichen Ableiterfahne zwischen Kathode und Gehäuse;
- Fig. 2a: eine Explosionsdarstellung der verschraubten Durchführung einer erfindungsgemässen Batterie;
- Fig. 2b: eine vergrösserte Darstellung der verschraubten Durchführung im Querschnitt;
- Fig. 2c: eine Darstellung der verschraubten Durchführung im Querschnitt mit den inneren und äusseren elektrischen Kontakten;
- Fig. 3: eine schematische Darstellung der Aufsicht auf die mit Kontaktanschlüssen versehene Aussenseite der erfindungsgemässen Batterie;
- Fig. 4: eine Darstellung einer erfindungsgemässen Batterie mit grösserem Stiftabstand in einem Querschnitt parallel zum Gehäusedeckel.
Grundsätzlich sind in den Figuren gleiche Teile mit gleichen Bezugszeichen versehen.

### Wege zur Ausführung der Erfindung

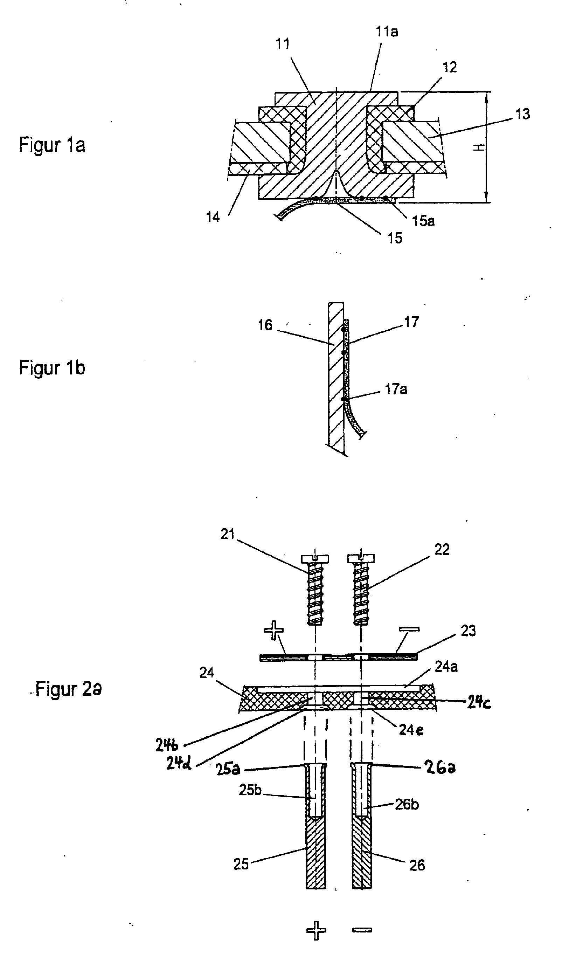

Fig. 1a zeigt eine Kontaktdurchführung von der Anode zu einer äusseren Kontaktfläche, wie sie bisher verbreitet verwendet wurde. Der Gehäusedeckel 13 besteht aus Metall und ist leitend mit dem Pluspol der Batterie verbunden (siehe Fig. 1 b). Seine Innenseite ist mit einer Isolationsplatte 14 gegenüber dem Inhalt des Gehäuses isoliert. Zur Durchführung des Minuspols auf die Aussenseite der Batterie ist ein Kontaktniet 11 in einer Öffnung des Gehäusedeckels 13 mittels einer nicht-leitenden Dichtung 12 isoliert angeordnet. Der Nietenkopf auf der Gehäuseaussenseite sowie die zurückgebogenen Nietenfüsse auf der Gehäuseinnenseite halten den Niet 11 formschlüssig fest. An seiner Innenseite ist der Kontaktniet 11 an den Nietenfüssen durch eine Kontaktschweissung 15a mit einer Ableiterfahne 15 zur Anode verbunden. Der Nietenkopf bildet die aussen zugängliche Kontaktfläche 11a. Es ist leicht erkennbar, dass die dargestellte Anordnung eine erhebliche Bauhöhe H aufweist, welche insbesondere durch die Isolationen auf der Innen- und Aussenseite des Gehäusedeckels 13, die Isolationsplatte 14 und die Dichtung 12, bedingt ist.

Fig. 1b zeigt die Kontaktierung eines leitenden Batteriegehäuses, wie sie bisher allgemein üblich war. Am metallischen Gehäusebecher 16 ist mittels Kontaktschweissung 17a eine Ableiterfahne zur Kathode angebracht.

Fig. 2a zeigt einen Teil des Querschnitts einer erfindungsgemässen Batterie mit zwei Kontaktanschlüssen. Es handelt sich um eine Batterie mit sehr geringen geometrischen Abmessungen; sie ist z. B. einige Millimeter (z. B. bis zu 10 mm) hoch und mehrere (z. B. 8 bis 20 mm) Millimeter breit. Sie weist in der Regel einen Energieinhalt von 1 Ah oder weniger auf. Das Batteriegehäuse 24 besteht aus Kunststoff, worauf eine Metallisierung zur Dampfsperre aufgebracht sein kann. Ein gasdichtes Gehäuse schützt den Elektrolyten vor Luftfeuchtigkeit. Das Batteriegehäuse 24 weist zwei Öffnungen 24b, 24c auf, durch welche die Ableiterstifte 25, 26 für den Plus- bzw. Minuspol mittels leitenden Schrauben 21, 22 verschraubt sind. Die Schraubenköpfe liegen auf einer Printplatte 23 auf, welche in einer Vertiefung 24a in der Oberseite des Batteriegehäuses 24 angeordnet ist. Die Kontaktstifte 25, 26 besitzen in einem oberen Teil Hohlräume 25b, 26b mit einem Gewinde, in welche die Schrauben 21, 22 eingedreht werden, in ihrem unteren Teil sind die Stifte massiv.

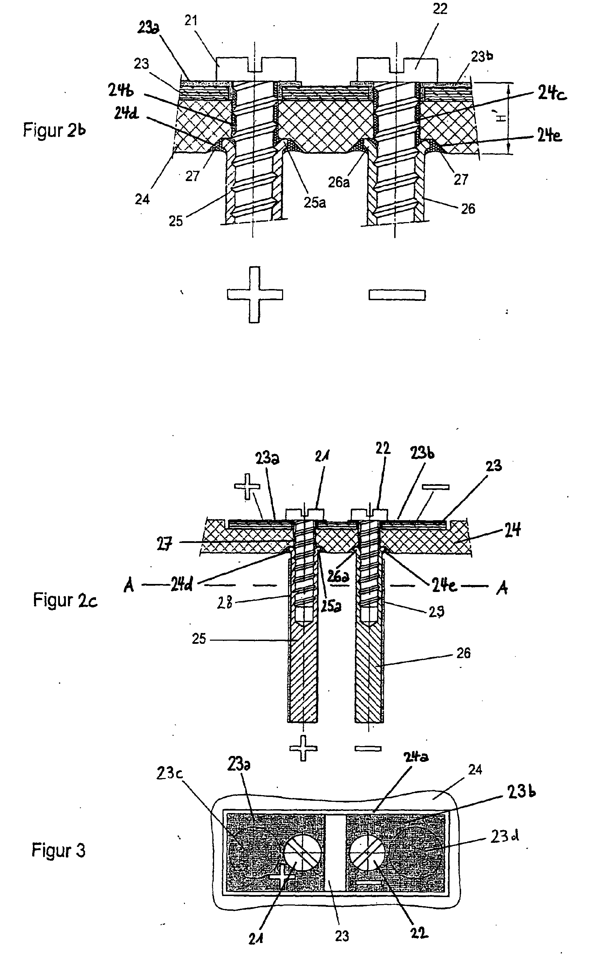

In Fig. 2b sind die Kontaktdurchführungen im Detail dargestellt. Die Köpfe der Schrauben 21, 22 kontaktieren gegeneinander isolierte Kontaktflächen 23a, 23b, welche als leitende Schichten auf der Printplatte 23 realisiert sind. Die Kontaktflächen leisten nach Einsetzen der Batterie den elektrischen Kontakt zum Gerät, welches mit Strom versorgt wird.

Ausserdem werden sie beim Aufladen der Batterie vom Ladegerät kontaktiert. Die Öffnungen 24b, 24c des Batteriegehäuses 24 weisen an ihrem unteren Ende zusätzliche Ausnehmungen 24d, 24e auf. Diese arbeiten mit entsprechenden Verbreiterungen 25a, 26a der Ableiterstifte 25, 26 zusammen, welche die Stifte in den Ausnehmungen abstützen. Diese Verbreiterungen 25a, 26a sind als in einem stumpfen Winkel nach aussen gebogene Mantelflächen der Hohlräume der Kontaktstifte 25, 26 realisiert, so dass sich ein Kragen bzw. ein kreisförmiger Flansch bildet. Dies führt zu einer grösseren Auflagefläche der Stifte 25, 26 auf dem Batteriegehäuse 24, damit zu einer höheren mechanischen Stabilität und zu einer besseren Abdichtung des Batterieinnenraums gegenüber den Ausnehmungen im Batteriegehäuse 24. In dieser Figur ist auch die geringere Bauhöhe H' gegenüber der in Fig. 1a dargestellten herkömmlichen Ausführung zu erkennen. Die Bauhöhe H' der erfindungsgemässen Batterie ist allein von der Dicke und damit der gewünschten mechanischen Stabilität des Batteriegehäuses 24 abhängig, wobei die auf dem Batteriegehäuse angebrachte Printplatte 23 zur mechanischen Stabilität beitragen kann, wenn sie z. B. auf das Batteriegehäuse 24 aufgeklebt wird. Der Kontaktdruck zwischen den Schrauben 21, 22 und den Kontaktflächen 23a, 23b sowie die Abdichtung des Batterieinnenraums können durch Anziehen der Schrauben 21, 22 erhöht bzw. sichergestellt werden.

Durch Einbringen einer Vergussmasse 27 in die verbleibenden Zwischenräume zwischen den Schrauben 21, 22, den Öffnungen 24b, 24c mit den Ausnehmungen 24d, 24e und den Stiften 25, 26 kann der Batterieinnenraum zusätzlich gegenüber der Aussenwelt abgedichtet werden. Dabei ist es zweckmässig, beim Aufbau der Batterie eine Vergussmasse zu verwenden, welche nach deren Einbringen aushärtet, so dass die gewünschte Viskosität erreicht wird. Dazu kann die Vergussmasse ein Lösungsmittel enthalten, sie kann durch UV-Strahlung härtbar sein oder einen Katalysator beinhalten, welcher mit Luftfeuchtigkeit reagiert und so zur Aushärtung der Vergussmasse führt. Die Vergussmasse kann also vor dem Eindrehen der Schrauben auf die gewünschten Stellen aufgetragen werden und wird nach dem Eindrehen fest. Neben der zusätzlichen Abdichtung verleiht eine solche Lösung dem Aufbau zusätzliche mechanische Stabilität und verunmöglicht ein unter Umständen gefährliches Öffnen der Batterie durch den Verbraucher. Soll das Öffnen der Batterie durch das Einbringen einer Vergussmasse 27 nicht verunmöglicht werden, weil z. B. verschiedene Teile der Batterie getrennt entsorgt bzw. wiederverwertet werden sollen, wird eine Vergussmasse gewählt, welche zähflüssig bleibt und die Schraube dadurch nicht im Gewinde fixiert. In diesem Fall, wenn die Vergussmasse nicht gleichzeitig die Schrauben festhält und sie dadurch gegen ein unbeabsichtigtes Lockern sichert, kann ein leitfähiger Federring zwischen dem Schraubenkopf und der Aussenseite des Batteriegehäuses vorgesehen werden. Wird eine Vergussmasse verwendet, ist es zweckmässig, die Ausnehmungen 24d, 24e so zu formen, dass die Vergussmasse die Verbreiterungen 25a, 26a allseitig umschliessen kann. Dies ist z. B. dann der Fall, wenn, wie in Fig. 2b dargestellt, die Ausnehmungen 24d, 24e in der Ebene der inneren Oberfläche des Batteriegehäuses 24 einen kreisförmigen Querschnitt und eine zur inneren Oberfläche parallele, versenkte ringförmige Stützfläche mit kleinerem Durchmesser aufweisen. Dazwischen verjüngen sich die Ausnehmungen gleichmässig. Die mit den Ausnehmungen 24d, 24e zusammenwirkenden Verbreiterungen 25a, 26a sind so geformt, dass der Kragen gegenüber der Mantelfläche der Kontaktstifte 25, 26 ungefähr 45° abgewinkelt ist. Der vordere Teil der Verbreiterungen 25a, 26a wirkt so mit der versenkten ringförmigen Stützfläche zusammen und bewirkt eine mechanisch stabile Abstützung. Gleichzeitig kann die Vergussmasse 27 die Verbreiterungen 25a, 26a sowohl auf der Innen- als auch auf der Aussenseite umschliessen und führt dazu zu einer guten Abdichtung des Batterie-Innenraums.

Soll keine Vergussmasse verwendet werden, können die Ausnehmungen 24d, 24e entfallen und die Verbreiterungen 25a, 26a als rechtwinklig zu den Mantelflächen der Kontaktstifte 25, 26 abgeknickte Flansche gebildet werden, welche auf der Innenseite des Batteriegehäuses 24 aufliegen.

Fig. 2c stellt die inneren und äusseren Kontakte der erfindungsgemässen Batterie dar. Die metallischen Trägerbänder 28, 29, welche die Kathode bzw. die Anode tragen, sind direkt auf die Kontaktstifte 25, 26 geschweisst. Der Stromfluss erfolgt von den Elektroden über die Kontaktstifte und die Schrauben zu den auf der Printplatte aufgebrachten Kontaktflächen 23a, 23b.

Fig. 3 zeigt eine Aussenansicht der Oberseite der erfindungsgemässen Batterie. Das Batteriegehäuse 24 weist eine Vertiefung 24a auf, in welcher eine Printplatte 23 angeordnet ist. Auf dieser sind zwei räumlich und elektrisch getrennte Kontaktflächen 23a, 23b aufgebracht, welche mittels zweier Schrauben 21, 22 elektrisch gespeist werden. Zwischen den Schrauben befindet sich ein elektrisch nicht leitender Abschnitt der Printplatte 23, welcher die beiden Kontaktflächen 23a, 23b voneinander elektrisch isoliert. Das von der Batterie mit Energie versorgte Gerät kann die Kontaktflächen 23a, 23b z.B. mittels Kontaktelementen mit kreisförmiger Stirnseite auf den kreisförmigen Teilflächen 23c, 23d kontaktieren. Die gezeigte Anordnung zeichnet sich dadurch aus, dass ein Grossteil der Batterieoberseite genutzt werden kann, auch wenn die beiden Ableiterstifte im Batteriegehäuse sehr nahe beieinander angebracht sind. Dies ermöglicht genügend grosse Kontaktflächen auch bei sehr kompakten Batterien. Sollen elektronische Bauteile oder Baugruppen auf der Printplatte 23 angebracht werden, erfolgt dies üblicherweise auf dem nicht leitend beschichteten Teil - dieser kann dann entsprechend vergrössert werden.

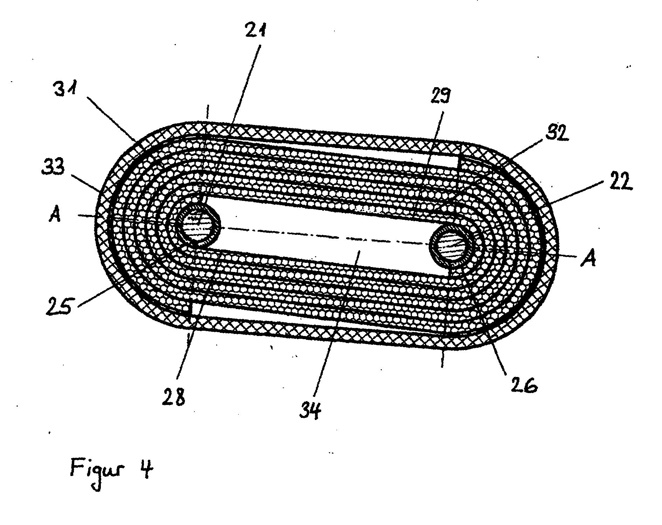

Fig. 4 zeigt einen Querschnitt durch eine erfindungsgemässe Batterie mit einen ähnlichen Aufbau wie die in Figs. 2, 3 dargestellte Batterie, allerdings mit einem grösseren Abstand zwischen den Stiften 25, 26. Der Querschnitt verläuft parallel zum Gehäusedeckel ungefähr entlang einer Linie A-A (s. Fig. 2c). Von der Seitenwand 33 wird ein kastenförmig abgeflachter, teilweise zylindrischer Innenraum umschlossen. Am Kontaktstift 25 ist ein Trägerband 28, welches die Kathode bildet, und am Kontaktstift 26 ein Trägerband 29, welches die Anode bildet, schweisstechnisch angepunktet. Zwischen den beiden Trägerbändern ist ein Separatorband 32 aufgewickelt, welches mit einem geeigneten Elektrolyt getränkt ist, so dass ein kompakter Wickel 31 gebildet wird. Der Wickel wird durch die beiden Kontaktstifte auch mechanisch gehalten, die Kontaktstifte dienen also auch als Halteelement für die gewickelte Elektrode. Die Hohlräume der röhrchenförmigen Kontaktstifte 25, 26 werden durch die Schrauben 21, 22 ausgefüllt, welche den elektrischen Kontakt zur Aussenseite leisten und die Kontaktstifte einseitig am Gehäusedeckel fixieren. Der Bereich zwischen den beiden Kontaktstiften 25, 26 trägt nicht zur Stromerzeugung bei, weil er nicht durch elektrochemisch aktive Elemente ausgefüllt wird. Diese Ausführungsform macht deutlich, dass durch Näherrücken der beiden Kontaktstifte gemäss der in Figs. 2, 3 gezeigten Ausführung der Erfindung dieser Zwischenraum 34 erheblich verkleinert und damit das aktiv nutzbare Volumen erheblich vergrössert werden kann.

Die Anordnung der Kontaktstifte 25, 26 im Batteriegehäuse 24 ist nicht auf die angegebene Ausführung beschränkt. Die Stifte können so positioniert werden, dass eine optimale Raumausnützung des Batterie-Innenraums durch das elektrochemisch aktive gewickelte Elektrodenelement ermöglicht wird. Falls mehrere Kontaktstifte vorgesehen sind, können diese zudem an unterschiedlichen, z. B. gegenüberliegenden, Aussenseiten des Batteriegehäuses fixiert werden, so dass die Kontaktflächen an unterschiedlichen Seiten angeordnet sind.

Die Abstützung der Kontaktstifte 25, 26 am Gehäusedeckel muss zudem nicht über die beschriebenen Verbreiterungen 25a, 26a erfolgen, sondern kann z.B. mittels eines im Gehäusedeckel vorgesehenen Gewindes oder mittels einer innen am Gehäusedeckel fixierten Mutter erfolgen. Die spannbare Verbindung kann ausserdem so realisiert werden, dass der Kontaktstift an seinem äusseren Ende mit einem Gewinde versehen ist, auf welches an der Gehäuseaussenseite eine entsprechende Mutter aufgeschraubt wird. Auf der Innenseite des Batteriegehäuses ist eine Verbreiterung des Kontaktstifts vorgesehen, welche den Stift am Batteriegehäuse abstützt.

Falls die Dichtigkeit des Batteriegehäuses weiter erhöht werden soll, kann auch zwischen der Printplatte 23 und dem Batteriegehäuse 24 eine Vergussmasse aufgebracht werden. Deren Zusammensetzung muss nicht derjenigen der Vergussmasse in den Ausnehmungen 24b, 24c, 24d, 24e entsprechen.

Falls eine verschraubte Durchführung vorgesehen ist, können die Schraubenköpfe auf der Batterieaussenseite versenkt werden, indem im Batteriegehäuse 24 und gegebenenfalls in der Kontaktplatte 23 entsprechende Aussparungen vorgesehen sind. Dies vermeidet vorstehende Batterieteile und kann zu einer einfacheren mechanischen Handhabung der Batterie beitragen.

Falls ausserdem die Schraubenköpfe zur Kontaktierung einer Kontaktplatte 23 dienen, so kann es von Vorteil sein, wenn die Unterseite des Schraubenkopfs mit einer metallischen Beschichtung versehen, also z. B. vernickelt oder vergoldet wird, damit ein guter elektrischer Kontakt zwischen den Schrauben 21, 22 und den Kontaktflächen 23a, 23b erreicht wird.

Zusammenfassend ist festzustellen, dass die erfindungsgemässe Batterie raumsparend aufgebaut ist und Kontaktflächen aufweist, welche einen häufigen Aus- und Wiedereinbau der Batterie in ein Gerät erleichtern.

## Patentansprüche

1. Batterie mit mindestens einem gewickelten Elektrodenelement (28) und mindestens einem Stift (25) zur Kontaktierung des Elektrodenelements in einem Gehäuse (24) und mit mindestens einem an einer Aussenseite des Gehäuses angebrachten Kontaktanschluss (21; 23a), welcher mit dem im Gehäuse angeordneten Stift (25) elektrisch verbunden ist, wobei zwischen dem Kontaktanschluss (21; 23a) und dem Stift (25) eine mechanisch spannbare Verbindung (21, 25) ausgebildet ist, **dadurch gekennzeichnet, dass** die mechanisch spannbare Verbindung (21, 25) derart angeordnet ist, dass der Stift im Innern des Gehäuses stabil an der Gehäusewand gehalten ist.

2. Batterie nach Anspruch 1, **dadurch gekennzeichnet**, das die spannbare Verbindung durch eine Schraubverbindung (21, 25) gebildet ist.

3. Batterie nach Anspruch 2, **dadurch gekennzeichnet, dass** ein Kopf der Schraubverbindung (21, 25) den Kontaktanschluss bildet.

4. Batterie nach einem der Ansprüche 1 bis 3, **dadurch gekennzeichnet, dass** der Kontaktanschluss (21, 23a) im Wesentlichen aus Gold oder Nickel besteht oder vergoldet oder vernickelt ist.

5. Batterie nach einem der Ansprüche 1 bis 4, **dadurch gekennzeichnet, dass** zwei Stifte (25, 26) im Gehäuse (24) untergebracht sind und dass an der Aussenseite des Gehäuses zwei Kontaktanschlüsse (21, 22; 23a, 23b) vorgesehen sind, welche gegenüber dem Gehäuse (24) isoliert sind, so dass das Gehäuse potenzialfrei ist.

6. Batterie nach einem der Ansprüche 1 bis 5, **dadurch gekennzeichnet, dass** der Stift (25), zumindest teilweise, als Röhrchen ausgebildet ist mit einer Verbreiterung (25a) an einem Ende zur Abstützung an einer Innenwand des Gehäuses.

7. Batterie nach einem der Ansprüche 1 bis 6, **dadurch gekennzeichnet, dass** der Stift (25) nur einseitig gehalten ist.

8. Batterie nach einem der Ansprüche 1 bis 7, **dadurch gekennzeichnet, dass** im Bereich des Kontaktanschlusses (21; 23a) eine Kontaktplatte (23) vorgesehen ist.

9. Batterie nach Anspruch 8, **dadurch gekennzeichnet, dass** die Kontaktplatte (23) in einer Vertiefung (24a) des Gehäuses (24) angeordnet ist.

10. Batterie nach Anspruch 8 oder 9, **dadurch gekennzeichnet, dass** die Kontaktplatte (23) zwei gegeneinander isolierte Kontaktanschlüsse (23a, 23b) aufweist.

11. Batterie nach einem der Ansprüche 8 bis 10, **dadurch gekennzeichnet, dass** auf der Kontaktplatte (23) elektronische Bauteile aufgebaut sind.

## Claims

1. A Battery having at least one wound electrode element (28) and at least one pin (25) for making contact with the electrode element in a housing (24), and having at least one contact connection (21, 23a) which is fitted to an outer face of the housing and is electrically connected to the pin (25) which is arranged in the housing, wherein a connection (21, 25) which can be tightened mechanically is formed between the contact connection (21; 23a) and the pin (25) **characterized in that** the connection (21, 25) which can be tightened is placed in such a way, that the pin (25) is held in the inside of the housing robustly on the housing wall.

2. Battery according to Claim 1, **characterized in that** the connection which can be tightened is formed by a screw connection (21, 25).

3. Battery according to Claim 2, **characterized in that** a head of the screw connection (21, 25) forms the contact connection.

4. Battery according to one of Claims 1 to 3, **characterized in that** the contact connection (21, 23a) is composed essentially of gold or nickel, or is gold-plated or nickel-plated.

5. Battery according to one of Claims 1 to 4, **characterized in that** two pins (25, 26) are accommodated in the housing (24), **in that** two contact connections (21, 22; 23a, 23b) are provided on the outer face of the housing and are isolated from the housing (24) so that the housing is floating.

6. Battery according to one of Claims 1 to 5, **characterized in that** the pin (25) is at least partially in the form of a small tube with the broadened area (25a) at one end in order to support it on an inner wall of the housing.

7. Battery according to one of Claims 1 to 6, **characterized in that** the pin (25) is held at only one end.

8. Battery according to one of Claims 1 to 7, **characterized in that** a contact board (23) is provided in the area of the contact connection (21; 23a).

9. Battery according to Claim 8, **characterized in that** the contact board (23) is arranged in a depression (24a) in the housing (24).

10. Battery according to Claim 8 or 9, **characterized in that** the contact board (23) has two contact connections (23a, 23b) which are isolated from one another.

11. Battery according to one of Claims 8 to 10, **characterized in that** electronic components are formed on the contact board (23).

## Revendications

1. Batterie qui présente au moins un élément d'électrode enroulé (28), au moins une tige (25) qui assure le contact avec l'élément d'électrode dans un boîtier (24) et au moins une borne de contact (21; 23a) placée sur le côté extérieur du boîtier et reliée électriquement à la tige (25) disposée dans le boîtier, un raccord (21, 25) serrable mécaniquement étant formé entre la borne de contact (21; 23a) et la tige (25),
**caractérisée en ce que**
le raccord (21, 25) serrable mécaniquement est disposé de telle sorte que la tige soit maintenue de manière stable sur la paroi du boîtier à l'intérieur du boîtier.

2. Batterie selon la revendication 1, **caractérisée en ce que** le raccord serrable est formé d'un raccord fileté (21, 25).

3. Batterie selon la revendication 2, **caractérisée en ce que** la tête du raccord fileté (21, 25) forme la borne de contact.

4. Batterie selon l'une des revendications 1 à 3, **caractérisée en ce que** la borne de contact (21, 23a) est constituée essentiellement d'or ou de nickel ou est dorée ou nickelée.

5. Batterie selon l'une des revendications 1 à 4, **caractérisée en ce que** deux tiges (25, 26) sont placées dans le boîtier (24) et **en ce que** deux bornes de contact (21, 22; 23a, 23b) sont prévues sur le côté extérieur du boîtier et sont isolées par rapport au boîtier (24) de telle sorte qu'aucun potentiel ne soit appliqué sur le boîtier.

6. Batterie selon l'une des revendications 1 à 5, **caractérisée en ce qu'**au moins une partie de la tige (25) est configurée comme tube qui présente à une extrémité un évasement (25a) qui permet de l'appuyer contre une paroi intérieure du boîtier.

7. Batterie selon l'une des revendications 1 à 6, **caractérisée en ce que** la tige (25) n'est maintenue que d'un côté.

8. Batterie selon l'une des revendications 1 à 7, **caractérisée en ce qu'**une plaque de contact (23) est prévue dans la partie occupée par la borne de contact (21; 23a).

9. Batterie selon la revendication 8, **caractérisée en ce que** la plaque de contact (23) est disposée dans un renfoncement (24a) du boîtier (24).

10. Batterie selon les revendications 8 ou 9, **caractérisée en ce que** la plaque de contact (23) présente deux bornes de contact (23a, 23b) isolées l'une de l'autre.

11. Batterie selon l'une des revendications 8 à 10, **caractérisée en ce que** des composants électroniques sont montés sur la plaque de contact (23).
